# EUROPÄISCHE PATENTSCHRIFT

(11) **EP 3 435 042 B1**
(45) Veröffentlichungstag und Bekanntmachung des Hinweises auf die Patenterteilung: **29.06.2022**
(21) Anmeldenummer: 18000581.1
(22) Anmeldetag: 06.07.2018
(51) Int. Cl.: G01F 1/66

(54) **VERFAHREN ZUM BETRIEB EINER ULTRASCHALLMESSEINRICHTUNG UND ULTRASCHALLMESSEINRICHTUNG**
METHOD FOR OPERATING AN ULTRASONIC MEASUREMENT DEVICE AND ULTRASONIC MEASUREMENT DEVICE
PROCÉDÉ DE FONCTIONNEMENT D'UN DISPOSITIF DE MESURE À ULTRASONS ET DISPOSITIF DE MESURE À ULTRASONS

(30) Priorität: 27.07.2017 DE 102017007166
(43) Veröffentlichungstag der Anmeldung: 30.01.2019
(73) Patentinhaber: Diehl Metering GmbH, 91522 Ansbach (DE)
(72) Erfinder: Ploß, Peter, DE - 95445 Bayreuth (DE); Mayle, Michael, DE - 91522 Ansbach (DE); Benkert, Andreas, DE - 91522 Ansbach (DE)
(74) Vertreter: Diehl Patentabteilung

(56) Entgegenhaltungen:
- US-A1- 2014 207 393
- US-A1- 2016 369 623
- US-B1- 9 335 297

## Beschreibung

Die Erfindung betrifft Verfahren zum Betrieb einer Ultraschallmesseinrichtung für wenigstens eine Eigenschaft eines durchfließenden Fluids, insbesondere einer Durchflussmenge, wobei die Ultraschallmesseinrichtung aufweist:
- ein Gehäuse mit einem im Inneren des Gehäuses angeordneten, von dem Fluid zu durchströmenden Messkanal,
- wenigstens einen Ultraschallwandler, der zum Senden und Empfangen von Ultraschallsignalen in den bzw. aus dem Messkanal ausgebildet ist, und
- wenigstens eine Steuereinrichtung zur Auswertung von Messsignalen des wenigstens einen Ultraschallwandlers zur Bestimmung wenigstens einer die Eigenschaft des Fluids in dem Messkanal beschreibenden Messgröße.

Daneben betrifft die Erfindung eine Ultraschallmesseinrichtung.

Ultraschallmesseinrichtungen zur Durchflussmessung eines Fluids, insbesondere als Wasserzähler für Wasser, sind im Stand der Technik bereits weithin bekannt. Dabei werden Ultraschallwandler, beispielsweise Piezo-Ultraschallwandler, verwendet, um Ultraschallwellen in einen Messkanal auszusenden und reflektierte Ultraschallsignale zu vermessen, um hieraus auf den Durchfluss des Fluids durch den Messkanal zu schließen. Rein beispielhaft für solche Ultraschallmesseinrichtungen sei auf DE 10 2013 008 781 A1 verwiesen. US 2016/0369623 A1 beschreibt eine Vorrichtung und ein Verfahren zum Bestimmen einer Eigenschaft eines in einem Rohr fließenden Fluids. US 9 335 297 B1 bezieht sich auf eine Vorrichtung zur nichtinvasiven Messung eines Wasserflusses. US 2014/207393 A1 beschreibt ein Ultraschallmessgerät.

Ein häufig allgemein bei Fluidzählern, insbesondere Wasserzählern, bestehendes Problem ist die möglichst einfache Realisierung einer Auslesung der entsprechenden Messeinrichtungen, insbesondere unter Nutzung von Mobilgeräten wie Smartphones, Tablets, Smartwatches, Smartglasses und dergleichen. Dabei wurden schon verschiedene Varianten vorgeschlagen, wie der Fluidzähler mit einer externen Empfangseinrichtung, insbesondere einem Mobilgerät, kommunizieren kann. Dabei können eines oder mehrere von einem Display, Pulsausgabe, MBUS/LBUS, proprietäre Hochfrequenz-Kommunikation, Nahfeldkommunikation und Bluetooth eingesetzt werden. Alle diese Kommunikationsansätze benötigen allerdings zusätzliche Hardware auf der Seite der Messeinrichtung, beispielsweise ein Display, einen Transceiver und/oder eine Antenne oder spezielle Empfangseinrichtungen zum Auslesen der Messeinrichtung.

Zudem ist seitens des Fluidzählers, also der Messeinrichtung, meist eine komplexere Intelligenz, üblicherweise realisiert in der Steuereinrichtung, erforderlich.

Auch andere Eigenschaften des Fluids neben dem Durchfluss können per Ultraschall vermessen werden, beispielsweise Konzentration, Dichte, Schallgeschwindigkeit, Temperatur und/oder Füllstand.

Der Erfindung liegt daher die Aufgabe zugrunde, eine möglichst aufwandsarm realisierbare, insbesondere ohne zusätzliche Hardware auskommende Kommunikationsmöglichkeit von einer Messeinrichtung zu einer Empfangseinrichtung anzugeben.

Der Gegenstand der vorliegenden Erfindung ist in den beigefügten Patentansprüchen 1-10 spezifiziert.

Zur Lösung dieser Aufgabe ist bei einem Verfahren der eingangs genannten Art erfindungsgemäß vorgesehen, dass zur Übertragung von wenigstens einer Übertragungsinformation an eine ein Mikrofon zur Spracheingabe aufweisende Empfangseinrichtung der wenigstens eine und/oder wenigstens eine weiterer Ultraschallwandler zum Aussenden von die Übertragungsinformation beschreibenden, mittels des Mikrofons empfangbaren Kommunikationssignalen angesteuert wird, wobei als Empfangseinrichtung ein Mobilgerät verwendet wird.

Erfindungsgemäß wird mithin vorgeschlagen, die Ultraschallwandler einer Ultraschallmesseinrichtung nicht ausschließlich zum Vermessen des Volumenflusses einzusetzen, sondern einen oder mehrere der Ultraschalltransducer zu nutzen, um eine Kommunikation zu einer ein Mikrofon, das entsprechende Kommunikationssignale empfangen kann, aufweisenden Empfangseinrichtung zu übertragen. Dabei ist es zwar aufgrund der ohnehin für Ultraschallwandler ausgelegten Elektronik der Ultraschallmesseinrichtung problemlos denkbar, wenigstens einen speziell hierfür vorgesehenen, weiteren Ultraschallwandler zusätzlich vorzusehen, es ist jedoch bevorzugt, die für die Messung vorgesehenen Ultraschallwandler auch zur Kommunikation einzusetzen. Während also aktuell die Ultraschallwandler inaktiv sind, wenn keine Eigenschaftsmessung, insbesondere Flussmessung, stattfinden soll, ist es im Rahmen der vorliegenden Erfindung insbesondere möglich, derartige Messpausen zu verwenden, um Übertragungsinformationen an eine externe Empfangseinrichtung drahtlos durch Ultraschall zu übermitteln. Dabei ist es denkbar und bevorzugt, dass das Aussenden von Kommunikationssignalen nur außerhalb des Messbetriebs erfolgt.

Auf diese Weise erlaubt die vorliegende Erfindung eine Kommunikation mit Empfangseinrichtungen, die ein Mikrofon aufweisen, ohne dass zusätzliche Teile für die Kommunikation in der Umgebung der Ultraschallmesseinrichtung, insbesondere des Wasserzählers, benötigt werden. Dies erlaubt es Verbrauchern oder sonstigen Benutzern, beispielsweise Ablesern, unter Verwendung der insbesondere als Mobilgeräte ausgebildeten Empfangseinrichtungen auf einfache Art und Weise die Übertragungsinformation, insbesondere einen aktuellen Zählerstand oder allgemein die Messgröße bzw. einen daraus abgeleiteten Wert, zu erhalten. Gegenüber Benutzern ist ein solches Feature kostenneutral, da keine zusätzliche Hardware benötigt wird. Im Gegenteil können hierbei die Kosten eines fest installierten bzw. mobilen Netzwerks eingespart werden, so dass beispielsweise ermöglicht werden kann, die Ultraschallmesseinrichtung seitens eines Verbrauchers oder Ablesers mittels eines Mobilgeräts als Empfangseinrichtung auszulesen und die dort empfangene Übertragungsinformation beispielsweise an einen zentralen Server weiter zu übermitteln.

Dabei wird ausgenutzt, dass die Ultraschallwandler zum Aussenden der Kommunikationssignale in einem von dem zur Messung verwendeten Frequenzspektrum auch weit entfernten, deutlich niedrigere Frequenzen enthaltenden Frequenzbereich angesteuert werden können. Während in Ultraschallmesseinrichtungen üblicherweise verwendete Ultraschallwandler beispielsweise eine Zentralfrequenz im Bereich von 500 kHz bis 4 MHz aufweisen können, sieht eine besonders bevorzugte Ausgestaltung der vorliegenden Erfindung vor, dass das Aussenden der Kommunikationssignale in einem in dem Frequenzintervall von 1 kHz bis 25 kHz und/oder oberhalb von 15 kHz liegenden Frequenzbereich erfolgt. Während also zur Messung die Ultraschallwandler beispielsweise in einem oberhalb von 250 kHz liegenden Frequenzbereich betrieben werden können, wird ein deutlich niedrigerer, im kHz-Bereich liegender Frequenzbereich für die Übertragung der Übertragungsinformationen verwendet, der von Mikrofonen empfangbar ist, insbesondere von Mikrofonen von Mobilgeräten wie Smartphones.

Dabei ist es besonders vorteilhaft, wenn der Frequenzbereich zum Aussenden der Kommunikationssignale oberhalb von 15 kHz liegt, da viele Menschen nicht in der Lage sind, Geräusche bei diesen Frequenzen wahrzunehmen, mithin die Kommunikation von der Ultraschallmesseinrichtung zu der Empfangseinrichtung still und somit nicht durch Benutzer wahrnehmbar erfolgen kann. Ein konkreter, einsetzbarer Frequenzbereich kann beispielsweise von 15 bis 22,05 kHz liegen.

Eine obere Grenze von 22,05 kHz bietet sich insbesondere im Hinblick darauf an, dass moderne Mobilgeräte, insbesondere Smartphones, häufig Mikrofone mit einer Abtastrate von 44,1 kHz aufweisen. Entsprechend dem Nyquist-Shannon-Theorem kann ein entsprechend empfangenes Signal Daten bis zu 22,05 kHz wiedergeben.

In einem von den Erfindern durchgeführten Experiment wurden als Kommunikationssignale Chirpsignale mit den Ultraschallwandlern ausgegeben, die eine linear ansteigende Frequenz eines Sinus von 1 kHz bis 30 kHz auswiesen und mit einem gängigen Smartphone als Empfangseinrichtung aufgenommen wurden. In einer folgenden spektrographischen Auswertung hat sich gezeigt, dass die linearen Chirps deutlich von Umgebungsgeräuschen für Frequenzen größer als 3 kHz unterscheidbar waren.

Dabei sei an dieser Stelle darauf hingewiesen, dass grundsätzlich die Nutzung von Schall zur Kommunikation in anderen Anwendungsgebieten bereits vorgeschlagen wurde, wobei rein beispielhaft auf einen Artikel von L. Deshotels, "Inaudible Sound as a Covert Channel in Mobile Devices", in WOOT/14, 2014, https://www.usenix.org/conference/woot14/workshop-program/presentation/deshotels verwiesen sei.

Wie bereits erwähnt, wird in besonders vorteilhafter Ausgestaltung der vorliegenden Erfindung als Empfangseinrichtung ein Mobilgerät, insbesondere ein Mobiltelefon, verwendet. Dann kann das für die Spracheingabe/Telefonate ohnehin vorgesehene Mikrofon des Mobilgeräts zum Empfang der Kommunikationssignale verwendet werden. Neben Mobiltelefonen, insbesondere Smartphones, können selbstverständlich auch andere Mobilgeräte eingesetzt werden, die ein derartiges Mikrofon aufweisen, beispielsweise Tablets und dergleichen. Besonders vorteilhaft ist in diesem Kontext ferner, wenn die Auswertung empfangener Kommunikationssignale durch ein Softwaremittel des Mobilgeräts, insbesondere eine App, erfolgt. Ein derartiges Softwaremittel, insbesondere eine App, kann beispielsweise von einem Hersteller der Ultraschallmesseinrichtung auf einem Internetportal, beispielsweise einer Website, bereitgestellt werden und es so Benutzern ermöglichen, Übertragungsinformationen von der Ultraschallmesseinrichtung entgegenzunehmen und zu interpretieren. In einer Weiterbildung kann das Softwaremittel auch ausgebildet sein, von der Ultraschallmesseinrichtung empfangene Übertragungsinformationen über ein Netzwerk, insbesondere ein Mobilfunknetzwerk und/oder das Internet, an eine zentrale Recheneinrichtung eines Versorgers für das Fluid zu übermitteln, um einen Ausleseprozess zu realisieren.

In einer konkreten Ausgestaltung der vorliegenden Erfindung kann vorgesehen sein, dass die Übertragungsinformation durch Frequenzumtastung (Frequency Shift Keying) in die Kommunikationssignale codiert wird. Die Frequenzumtastung (Frequency Shift Keying - FSK) ist im Stand der Technik bereits bekannt und nutzt zwei unterschiedliche Frequenzen, beispielsweise 17 kHz und 19 kHz, um die zwei binären Zustände "0" und "1" zu codieren, worin eine gegebene Anzahl von Perioden der gegebenen Frequenz einer binären Zahl entspricht.

Eine Weiterbildung der Erfindung sieht vor, dass das Aussenden der Kommunikationssignale auf eine Betätigung eines Bedienelements an der Ultraschallmesseinrichtung hin und/oder zyklisch erfolgt. Während eine zyklische Aussendung, beispielsweise innerhalb von Messpausen, also außerhalb des Messbetriebs, grundsätzlich denkbar ist, wird hierdurch dennoch ein weiterer elektrischer Energieverbrauch erzeugt, der in einem Großteil der Fälle nicht genutzt wird. Mithin wird es im Rahmen der Erfindung bevorzugt, die Übertragung der Übertragungsinformation gezielt zu initiieren, insbesondere, indem ein entsprechendes Bedienelement, beispielsweise ein Taster, seitens der Ultraschallmesseinrichtung vorgesehen wird, bei dessen Betätigung das Aussenden der Kommunikationssignale erfolgt. Dies ist eine äußerst einfache Realisierung, in der ein Benutzer beispielsweise das Softwaremittel, insbesondere die App, auf seinem Mobilgerät starten und sodann den Taster betätigen kann, um die Informationen zu empfangen, wodurch insbesondere vermieden wird, aufwändige weitere Kommunikationsansätze zu realisieren. Beispielsweise kann ein Benutzer so auf Tastendruck/Bedienelementbetätigung einen aktuellen Zählerstand auf sein Mobilgerät erhalten.

Dabei sei darauf hingewiesen, dass es im Rahmen der vorliegenden Erfindung grundsätzlich selbstverständlich auch denkbar ist, zusätzlich weitere Kommunikationswege zu eröffnen bzw. zu nutzen, beispielsweise eine zusätzliche Funkkommunikation und/oder optische Kommunikation. Ferner ist es im Rahmen der vorliegenden Erfindung nicht ausgeschlossen, die Kommunikation zweiwegig, also in beide Richtungen, umzusetzen, wenn die Empfangseinrichtung einen geeigneten Lautsprecher bzw. allgemein Transducer aufweist, über den Antwortsignale und/oder Anforderungssignale an die Ultraschallmesseinrichtung ausgesendet und mittels der dortigen Ultraschallwandler empfangen werden können.

Zweckmäßigerweise kann die Übertragungsinformation eine aktuelle Messgröße und/oder einen daraus abgeleiteten Wert, insbesondere einen aktuellen Zählerstand, und/oder eine aktuelle Zustandsinformation der Ultraschallmesseinrichtung umfassen. Während ein Hauptanwendungsgebiet der vorliegenden Erfindung ersichtlich den Erhalt eines aktuellen Zählerstandes auf der Empfangseinrichtung betrifft, ist es selbstverständlich auch denkbar, andere bzw. weitere Übertragungsinformationen zu verwenden. So kann beispielsweise in einem Fehlerfall der Ultraschallmesseinrichtung vorgesehen sein, als Zustandsinformation einen Fehlercode oder dergleichen auszugeben, den beispielsweise das Softwaremittel eines Mobilgeräts entsprechend interpretieren und auswerten kann. Auf diese Weise kann insbesondere auch diesbezüglich auf ein Display oder dergleichen verzichtet werden.

Neben dem Verfahren betrifft die Erfindung auch eine Ultraschallmesseinrichtung für wenigstens eine Eigenschaft eines durchfließenden Fluids, insbesondere einer Durchflussmenge, wobei die Ultraschallmesseinrichtung aufweist:
- ein Gehäuse mit einem im Inneren des Gehäuses angeordneten, von dem Fluid zu durchströmenden Messkanal,
- wenigstens einen Ultraschallwandler, der zum Senden und Empfangen von Ultraschallsignalen in den bzw. aus dem Messkanal ausgebildet ist, und
- wenigstens eine Steuereinrichtung zur Auswertung von Messsignalen des wenigstens einen Ultraschallwandlers zur Bestimmung wenigstens einer die Eigenschaft des Fluids in dem Messkanal beschreibenden Messgröße,
- wobei die Steuereinrichtung zur Ansteuerung des wenigstens einen und/oder wenigstens eines weiteren Ultraschallwandlers zur Übertragung von wenigstens einer Ubertragungsinformation an eine ein Mikrofon zur Spracheingabe aufweisende Empfangseinrichtung zum Aussenden von die Übertragungsinformation beschreibenden, mittels des Mikrofons empfangbaren Kommunikationssignalen ausgebildet ist, wobei die Empfangseinrichtung ein Mobilgerät ist.

Sämtliche Ausführungen bezüglich des erfindungsgemäßen Verfahrens lassen sich analog auf die erfindungsgemäße Ultraschallmesseinrichtung übertragen, so dass auch mit dieser die bereits genannten Vorteile erhalten werden können. Bei der erfindungsgemäßen Ultraschallmesseinrichtung kann es sich insbesondere um einen Wasserzähler (bzw. allgemein bei dem Fluid um Wasser) handeln und/oder die Ultraschallwandler können insbesondere als Piezo-Ultraschallwandler ausgebildet sein.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Figur 1: einen Ablaufplan eines Ausführungsbeispiels des erfindungsgemäßen Verfahrens, und
- Figur 2: eine Prinzipskizze einer erfindungsgemäßen Ultraschallmesseinrichtung.

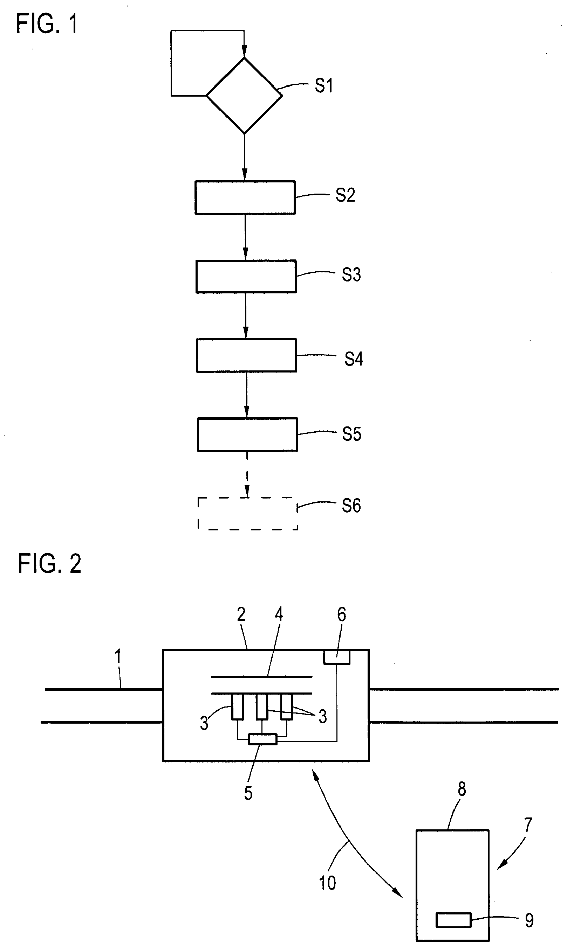

Figur 1 zeigt einen Ablaufplan eines Ausführungsbeispiels des erfindungsgemäßen Verfahrens. Dabei wird eine Ultraschallmesseinrichtung verwendet, die den Durchfluss eines Fluids, vorliegend Wasser, in einem Leitungssystem eines Verbrauchers misst, wie dies im Stand der Technik grundsätzlich bekannt ist. Bei der Ultraschallmesseinrichtung handelt es sich mithin um einen Ultraschall-Wasserzähler. Die Ultraschallmesseinrichtung nutzt auf bekannte Art und Weise Ultraschallwandler, hier Piezo-Ultraschallwandler, welche Ultraschallsignale in einen Messkanal aussenden und anhand der wieder empfangenen, reflektierten Ultraschallsignale auf den Volumendurchfluss des Fluids schließen können, wozu eine entsprechende Steuereinrichtung vorgesehen ist. Der hierdurch gemessene Verbrauch an Wasser wird akkumuliert, so dass sich immer ein aktueller Zählerstand ergibt, der in der Steuereinrichtung vorgehalten wird.

Soll dieser aktuelle Zählerstand drahtlos ausgelesen werden und an eine Empfangseinrichtung, hier ein Mobiltelefon als Mobilgerät, übertragen werden, begibt sich ein Benutzer zu der Ultraschallmesseinrichtung und aktiviert ein Programmmittel, hier eine App, auf dem Mobiltelefon, um dieses in einen empfangsbereiten Zustand zu bringen. Sodann wird im vorliegenden Ausführungsbeispiel ein Bedienelement an der Ultraschallmesseinrichtung, vorliegend ein Taster, betätigt. Wird die Betätigung dieses Tasters in einem Schritt S1 festgestellt, wird in einem Schritt S2 die Übertragungsinformation in Kommunikationssignale codiert. Dabei wird vorliegend Frequenzumtastung (Frequency Shift Keying) mit zwei jeweils für einen der binären Zustände stehenden Frequenzen verwendet, die oberhalb von 15 kHz liegen, mithin im für die meisten Menschen nicht mehr hörbaren Bereich. Beispielsweise können 17 kHz und 19 kHz verwendet werden.

In einem Schritt S3 werden die im Schritt S2 ermittelten Kommunikationssignale außerhalb des Messbetriebs der Ultraschallmesseinrichtung, mithin in einer Messpause, durch entsprechendes Ansteuern der Ultraschallwandler mittels der Steuereinrichtung ausgesendet. Während die Ultraschallwandler im Messbetrieb eher im MHz-Bereich arbeiten, hat sich gezeigt, dass auch ein Betrieb im kHz-Bereich möglich ist, in dem wiederum übliche Mikrofone von Mobilgeräten, hier Mobiltelefonen, messen können.

Entsprechend werden die gesendeten Kommunikationssignale im Schritt S4 durch ein Mikrofon des Mobiltelefons empfangen. Die aufgenommenen Kommunikationssignale werden in einem Schritt S5 ausgewertet und unter Kenntnis des Frequency Shift Keying wieder decodiert, um die Übertragungsinformationen zurückzuerhalten und insbesondere auf einem Display des Mobiltelefons darzustellen und/oder sie auf dem Mobiltelefon abzuspeichern.

In einem optionalen Schritt S6 kann, beispielsweise durch Betätigung eines entsprechenden Bedienelements des Softwaremittels/der App eine Übertragung der Übertragungsinformation an eine zentrale Servereinrichtung bzw. allgemeine Datensammelstelle eines Versorgers erfolgen, um einen Auslesevorgang zu realisieren.

Neben dem aktuellen Zählerstand als Übertragungsinformation können selbstverständlich auch andere Übertragungsinformationen übertragen werden, insbesondere eine einen aktuellen Zustand angebende Zustandsinformation, beispielsweise ein Fehlercode, wenn gerade ein Fehlerzustand vorliegt.

Figur 2 zeigt eine Prinzipskizze einer in einer Wasserleitung 1 verbauten Ultraschallmesseinrichtung 2, welche vorliegend mehrere Ultraschallwandler 3 aufweist, die, wie grundsätzlich bekannt, in einer beliebigen Konfiguration einem Messkanal 4 zugeordnet sein können, durch den das Wasser strömt. Die Ultraschallwandler 3 werden durch eine Steuereinrichtung 5 angesteuert und ausgelesen, die auch zum Zusammenstellen der Kommunikationssignale und zum Ansteuern der Ultraschallwandler 3 zum Aussenden der Kommunikationssignale ausgebildet ist, wenn ein hier als Taster ausgebildetes Bedienelement 6 betätigt wird. Angedeutet ist zudem als Empfangseinrichtung 7 ein Mobilgerät 8, hier ein Mobiltelefon, welches, wie dargelegt, ein Mikrofon 9 aufweist, das im Frequenzbereich des hier beispielhaft verwendeten Frequency Shift Keying messen kann und somit die Kommunikationssignale empfangen kann, welche dann durch das Softwaremittel ausgewertet werden. Wie durch den Doppelpfeil 10 angedeutet ist, ist grundsätzlich auch eine Zweiwegekommunikation denkbar, wenn die Empfangseinrichtung 7 auch einen Lautsprecher oder dergleichen aufweist, über den Anforderungssignale und/oder Antwortsignale ausgegeben werden können, die über die Ultraschallwandler 3 empfangbar sind.

Es sei noch angemerkt, dass alternativ, aber weniger bevorzugt, für die Zwecke der Kommunikation gezielt weitere, zusätzliche Ultraschallwandler hinzugefügt werden können.

### Bezugszeichenliste

### S1-S6 Schritt

- 1: Wasserleitung
- 2: Ultraschallmesseinrichtung
- 3: Ultraschallwandler
- 4: Messkanal
- 5: Steuereinrichtung
- 6: Bedienelement
- 7: Empfangseinrichtung
- 8: Mobilgerät
- 9: Mikrofon
- 10: Doppelpfeil

## Patentansprüche

1. Verfahren zum Betrieb einer Ultraschallmesseinrichtung (2) für wenigstens eine Eigenschaft eines durchfließenden Fluids, insbesondere einer Durchflussmenge, wobei die Ultraschallmesseinrichtung (2) aufweist:
- ein Gehäuse mit einem im Inneren des Gehäuses angeordneten, von dem Fluid zu durchströmenden Messkanal (4),
- wenigstens einen Ultraschallwandler (3), der zum Senden und Empfangen von Ultraschallsignalen in den bzw. aus dem Messkanal (4) ausgebildet ist, und
- wenigstens eine Steuereinrichtung (5) zur Auswertung von Messsignalen des wenigstens einen Ultraschallwandlers (3) zur Bestimmung wenigstens einer die Eigenschaft des Fluids in dem Messkanal (4) beschreibenden Messgröße, wobei zur Übertragung von wenigstens einer Übertragungsinformation an eine ein Mikrofon (9) zur Spracheingabe aufweisende Empfangseinrichtung (7) der wenigstens eine und/oder wenigstens ein weiterer Ultraschallwandler (3) zum Aussenden von die Übertragungsinformation beschreibenden, mittels des Mikrofons (9) empfangbaren Kommunikationssignalen angesteuert wird, wobei als Empfangseinrichtung (7) ein Mobilgerät (8) verwendet wird.

2. Verfahren nach Anspruch 1, **dadurch gekennzeichnet, dass** das Aussenden der Übertragungsinformation in einem in dem Frequenzintervall von 1 kHz bis 25 kHz und/oder oberhalb von 15 kHz liegenden Frequenzbereich erfolgt und/oder die Ultraschallwandler (3) im Messbetrieb in einem oberhalb von 250 kHz liegenden Frequenzbereich betrieben werden.

3. Verfahren nach Anspruch 1 oder 2, **dadurch gekennzeichnet, dass** als Mobilgerät (8) ein Mobiltelefon verwendet wird.

4. Verfahren nach einem der vorangehenden Ansprüche, **dadurch gekennzeichnet, dass** die Auswertung empfangener Kommunikationssignale durch ein Softwaremittel des Mobilgeräts (8), insbesondere eine App, erfolgt.

5. Verfahren nach einem der vorangehenden Ansprüche, **dadurch gekennzeichnet, dass** das Aussenden von Kommunikationssignalen nur außerhalb des Messbetriebs erfolgt.

6. Verfahren nach einem der vorangehenden Ansprüche, **dadurch gekennzeichnet, dass** die Übertragungsinfomation durch Frequency Shift Keying binär in die Kommunikationssignale kodiert wird.

7. Verfahren nach einem der vorangehenden Ansprüche, **dadurch gekennzeichnet, dass** das Aussenden der Kommunikationssignale auf eine Betätigung eines Bedienelements (6) an der Ultraschallmesseinrichtung (2) hin und/oder zyklisch erfolgt.

8. Verfahren nach einem der vorangehenden Ansprüche, **dadurch gekennzeichnet, dass** die Übertragungsinformation eine aktuelle Messgröße und/oder einen daraus abgeleiteten Wert und/oder eine aktuelle Zustandsinformation der Ultraschallmesseinrichtung (2) umfasst.

9. Ultraschallmesseinrichtung (2) für wenigstens eine Eigenschaft eines durchfließenden Fluids, insbesondere einer Durchflussmenge, wobei die Ultraschallmesseinrichtung (2) aufweist:
- ein Gehäuse mit einem im Inneren des Gehäuses angeordneten, von dem Fluid zu durchströmenden Messkanal (4),
- wenigstens einen Ultraschallwandler (3), der zum Senden und Empfangen von Ultraschallsignalen in den bzw. aus dem Messkanal (4) ausgebildet ist, und
- wenigstens eine Steuereinrichtung (5) zur Auswertung von Messsignalen des wenigstens einen Ultraschallwandlers (3) zur Bestimmung wenigstens einer die Eigenschaft des Fluids in dem Messkanal (4) beschreibenden Messgröße, **dadurch gekennzeichnet, dass** die Steuereinrichtung (5) zur Ansteuerung des wenigstens einen und/oder wenigstens eines weiteren Ultraschallwandlers (3) zur Übertragung von wenigstens einer Übertragungsinformation an eine ein Mikrofon (9) zur Spracheingabe aufweisende Empfangseinrichtung (7) zum Aussenden von die Übertragungsinformation beschreibenden, mittels des Mikrofons (9) empfangbaren Kommunikationssignalen ausgebildet ist, wobei die Empfangseinrichtung (7) ein Mobilgerät (8) ist.

10. Ultraschallmesseinrichtung (2) nach Anspruch 9, **dadurch gekennzeichnet, dass** das Mobilgerät (8) ein Mobiltelefon ist.

## Claims

1. Method for operating an ultrasonic measuring device (2) for at least one property of a fluid flowing through it, in particular a flow rate, wherein the ultrasonic measuring device (2) comprises:
- a housing having a measurement channel (4) that is arranged inside the housing and through which the fluid is intended to flow,
- at least one ultrasonic transducer (3) designed to send and receive ultrasonic signals to and from the measurement channel (4), and
- at least one control device (5) for evaluating measurement signals from the at least one ultrasonic transducer (3) in order to determine at least one measured variable describing the property of the fluid in the measurement channel (4), wherein in order to transmit at least one piece of transmission information to a receiving device (7), which comprises a microphone (9) for voice input, the at least one and/or at least one further ultrasonic transducer (3) is actuated to transmit communication signals that describe the transmission information and are receivable by means of the microphone (9), the receiving device (7) used being a mobile device (8).

2. Method according to Claim 1, **characterized in that** the transmission information is transmitted in a frequency band that is in the frequency range from 1 kHz to 25 kHz and/or above 15 kHz, and/or in the measurement mode the ultrasonic transducers (3) are operated in a frequency band that is above 250 kHz.

3. Method according to Claim 1 or 2, **characterized in that** the mobile device (8) used is a mobile phone.

4. Method according to one of the preceding claims, **characterized in that** received communication signals are evaluated by way of a software means of the mobile device (8), in particular an app.

5. Method according to one of the preceding claims, **characterized in that** communication signals are transmitted only outside of the measurement mode.

6. Method according to one of the preceding claims, **characterized in that** the transmission information is binary-encoded into the communication signals by way of frequency shift keying.

7. Method according to one of the preceding claims, **characterized in that** the communication signals are transmitted when an operator control element (6) on the ultrasonic measuring device (2) is operated and/or cyclically.

8. Method according to one of the preceding claims, **characterized in that** the transmission information comprises a present measured variable and/or a value derived therefrom and/or present state information for the ultrasonic measuring device (2).

9. Ultrasonic measuring device (2) for at least one property of a fluid flowing through it, in particular a flow rate, wherein the ultrasonic measuring device (2) comprises:
- a housing having a measurement channel (4) that is arranged inside the housing and through which the fluid is intended to flow,
- at least one ultrasonic transducer (3) designed to send and receive ultrasonic signals to and from the measurement channel (4), and
- at least one control device (5) for evaluating measurement signals from the at least one ultrasonic transducer (3) in order to determine at least one measured variable describing the property of the fluid in the measurement channel (4), **characterized in that** in order to transmit at least one piece of transmission information to a receiving device (7), which comprises a microphone (9) for voice input, the control device (5) is designed to actuate the at least one and/or at least one further ultrasonic transducer (3) to transmit communication signals that describe the transmission information and are receivable by means of the microphone (9), the receiving device (7) being a mobile device (8).

10. Ultrasonic measuring device (2) according to Claim 9, **characterized in that** the mobile device (8) is a mobile phone.

## Revendications

1. Procédé pour faire fonctionner un dispositif de mesure à ultrasons (2) pour au moins une propriété d'un fluide en écoulement, notamment un débit, le dispositif de mesure à ultrasons (2) comprenant :
- un boîtier, avec un canal de mesure (4) disposé à l'intérieur du boîtier, qui doit être traversé par l'écoulement de fluide,
- au moins un transducteur d'ultrasons (3), qui est configuré pour émettre et recevoir des signaux ultrasoniques dans ou depuis le canal de mesure (4), et
- au moins un dispositif de commande (5) destiné à interpréter des signaux de mesure de l'au moins un transducteur d'ultrasons (3) en vue de déterminer au moins une grandeur de mesure qui décrit la propriété du fluide dans le canal de mesure (4),
pour la transmission d'au moins une information de transmission à un dispositif de réception (7) qui possède un microphone (9) servant à l'entrée de parole, l'au moins un et/ou au moins un transducteur d'ultrasons (3) supplémentaire étant commandé pour émettre des signaux de communication qui décrivent l'information de transmission et qui peuvent être reçus au moyen du microphone (9), le dispositif de réception (7) utilisé étant un appareil mobile (8).

2. Procédé selon la revendication 1, **caractérisé en ce que** l'émission de l'information de transmission s'effectue dans une plage de fréquence se situant dans l'intervalle de fréquences de 1 kHz à 25 kHz et/ou au-dessus de 15 kHz et/ou les transducteurs d'ultrasons (3) en mode de mesure fonctionnent dans une plage de fréquence supérieure à 250 kHz.

3. Procédé selon la revendication 1 ou 2, **caractérisé en ce que** l'appareil mobile (8) utilisé est un téléphone mobile.

4. Procédé selon l'une des revendications précédentes, **caractérisé en ce que** l'interprétation des signaux de communication reçus s'effectue par le biais d'un moyen logiciel de l'appareil mobile (8), notamment une application.

5. Procédé selon l'une des revendications précédentes, **caractérisé en ce que** l'émission de signaux de communication s'effectue uniquement en dehors du mode de mesure.

6. Procédé selon l'une des revendications précédentes, **caractérisé en ce que** l'information de transmission est codée de manière binaire dans les signaux de communication par modulation par déplacement de fréquence.

7. Procédé selon l'une des revendications précédentes, **caractérisé en ce que** l'émission de signaux de communication s'effectue sur un actionnement d'un élément de commande (6) sur le dispositif de mesure à ultrasons (2) et/ou de manière cyclique.

8. Procédé selon l'une des revendications précédentes, **caractérisé en ce que** l'information de transmission comprend une valeur de mesure actuelle et/ou une valeur qui en est dérivée et/ou une information d'état actuelle du dispositif de mesure à ultrasons (2).

9. Dispositif de mesure à ultrasons (2) pour au moins une propriété d'un fluide en écoulement, notamment un débit, le dispositif de mesure à ultrasons (2) comprenant :
- un boîtier, avec un canal de mesure (4) disposé à l'intérieur du boîtier, qui doit être traversé par l'écoulement de fluide,
- au moins un transducteur d'ultrasons (3), qui est configuré pour émettre et recevoir des signaux ultrasoniques dans ou depuis le canal de mesure (4), et
- au moins un dispositif de commande (5) destiné à interpréter des signaux de mesure de l'au moins un transducteur d'ultrasons (3) en vue de déterminer au moins une grandeur de mesure qui décrit la propriété du fluide dans le canal de mesure (4),
**caractérisé en ce que** le dispositif de commande (5), en vue de commander l'au moins un et/ou au moins un transducteur d'ultrasons (3) supplémentaire pour la transmission d'au moins une information de transmission à un dispositif de réception (7) qui possède un microphone (9) servant à l'entrée de parole, est configuré pour émettre des signaux de communication qui décrivent l'information de transmission et qui peuvent être reçus au moyen du microphone (9), le dispositif de réception (7) étant un appareil mobile (8).

10. Dispositif de mesure à ultrasons (2) selon la revendication 9, **caractérisé en ce que** l'appareil mobile (8) est un téléphone mobile.
